# FASCICULE DE BREVET EUROPEEN

(11) **EP 4 034 753 B1**
(45) Date de publication et mention de la délivrance du brevet: **12.07.2023**
(21) Numéro de dépôt: 20776170.1
(22) Date de dépôt: 23.09.2020
(51) Int. Cl.: F01D 5/28, F01D 5/14

(54) **AUBE POUR UN MOTEUR DE TURBOMACHINE ET MOTEUR À TURBOMACHINE ASSOCIÉ**
SCHAUFEL FÜR EIN STRÖMUNGSMASCHINENTRIEBWERK UND ZUGEHÖRIGES STRÖMUNGSMASCHINENTRIEBWERK
BLADE FOR A TURBOMACHINE ENGINE AND CORRESPONDING TURBOMACHINE ENGINE

(30) Priorité: 24.09.2019 FR 1910503
(43) Date de publication de la demande: 03.08.2022
(73) Titulaire: Safran Helicopter Engines, 64510 Bordes (FR)
(72) Inventeur: FONTS, Pierre-Marie, 77550 Moissy-Cramayel (FR); DIJOUD, Marc, Maurice, 77550 Moissy-Cramayel (FR); CLECH, Hélène, 77550 Moissy-Cramayel (FR); NIN, Michel, 77550 Moissy-Cramayel (FR); HERNANDEZ, Lorenzo, Huacan, 77550 Moissy-Cramayel (FR)
(74) Mandataire: Casalonga
(86) Numéro de dépôt international: PCT/EP2020/076620
(87) Numéro de publication internationale: WO 2021/058599

(56) Documents cités:
- EP-A2- 1 980 713

## Description

### Domaine technique de l'invention

La présente invention concerne le domaine des turbomachines, telles qu'une turbine à gaz, par exemple d'un aéronef.

Précisément, la présente invention concerne une aube pour un moteur à turbomachine et un moteur à turbomachine.

Plus particulièrement, la présente invention concerne la protection des pales de turbine à gaz contre des dommages provoqués par l'oxydation et/ou la corrosion, et ce, notamment dans des zones critiques de la pale. Par « zone critique », on entend une zone de la pale dans laquelle tout dommage peut impacter fonctionnellement la pale. L'impact fonctionnel le plus redouté concerne la baisse de la durée de vie de la pale en fatigue thermomécanique ou vibratoire engendrée par l'oxydation et la corrosion dans des zones de la pale où les contraintes sont élevées. Généralement, les zones de contraintes élevées sont situées dans le pied de la pale, à proximité de la plateforme.

### Etat de la technique antérieur

Il existe de nombreuses solutions afin de protéger les pales de turbine à gaz contre l'oxydation et/ou la corrosion. Le matériau de la pale peut, par exemple, être remplacé par un matériau ayant une meilleur tenue en oxydation. Une telle solution augmente considérablement le prix de la pale et sa durée de mise en oeuvre est liée au développement d'un nouvel outillage de fonderie.

Le profil complet de la pale peut, par exemple, être revêtu entièrement et de façon homogène par un matériau ayant une meilleure tenue en oxydation et en corrosion. Une telle solution diminue la durée de vie en fluage de la pale par un ajout de masse en tête et en milieu de profil. L'augmentation de masse généralisée accroît également les contraintes dans la partie basse du profil et réduit sa tenue en fatigue thermomécanique ou vibratoire. Le revêtement en sommet de pale peut également fluer et créer des touches non souhaitées entre rotor et stator.

EP 1 980 713 A2 divulgue une aube pour un moteur à turbomachine selon le préambule de la revendication 1.

Ainsi, il existe un besoin de protéger efficacement la pale d'une turbine à gaz pour limiter les impacts fonctionnels connexes, tout en permettant une application rapide et à moindre coût.

### Exposé de l'invention

La présente invention a donc pour but de palier les inconvénients précités.

L'objectif de l'invention est donc de permettre une protection efficace d'une aube de turbomachine contre la corrosion et l'oxydation, sans impacter les performances du moteur.

L'invention a donc pour objet une aube pour un moteur à turbomachine comprenant une pale aérodynamique s'étendant radialement vers l'extérieur et comportant une tête de pale et un pied de pale, et une plateforme raccordée au pied de pale par une extrémité supérieure. La distance radiale maximale entre la tête de pale et la plateforme définit une étendue maximale de la surface portante de la pale.

L'aube est partiellement recouverte d'une bande de protection contre l'oxydation et la corrosion, ladite bande s'étendant entre une limite inférieure située sur au moins une partie de la plateforme et une limite supérieure située sur le pied de pale.

En d'autres termes, la bande de protection recouvre l'aube uniquement à son extrémité radiale interne fortement contrainte. L'extrémité radiale externe de la pale, ou tête de pale, n'est donc pas revêtue. Ainsi, on évite les nuisances liées à la présence d'un revêtement sur l'extrémité radiale externe de la pale, notamment en termes de masse, d'augmentation des contraintes, de fluage de revêtement, etc..., tout en améliorant la durée de vie en fatigue et en thermomécanique de l'extrémité radiale interne de la pale.

La distance radiale entre lesdites limites définit la hauteur de la bande de protection.

Avantageusement, la limite inférieure est située à une extrémité inférieure de la plateforme, radialement opposée à l'extrémité supérieure.

Avantageusement, la limite supérieure est située entre une première distance radiale et une deuxième distance radiale.

Ladite première distance radiale correspond à une distance entre le raccordement du pied de pale à la plateforme et une première zone située sur ledit pied de pale, et ladite deuxième distance correspond à une distance entre le raccordement du pied de pale à la plateforme et une deuxième zone située sur ledit pied de pale.

Ladite deuxième zone correspond à une zone limitante en fluage.

Par zone « limitante en fluage », on entend une zone combinant une contrainte mécanique et un niveau thermique tels que la pale se dégradera (ou vieillira) préférentiellement en fluage dans cette zone. Cette zone est classiquement proche du milieu du profil. La zone limitante en fluage peut être déterminée, par exemple, par essai sur le composant, ou par des calculs élasto-plastiques sur toute la pale pour mettre en évidence les zones qui se déformeraient le plus sous l'effet des contraintes, températures et des durées d'application de ces sollicitations, ou par exemple, par la relation de Larson-Miller liant sur toute la pale contraintes, températures et durées de vie à rupture pour un matériau donné, la zone limitante en fluage étant, par exemple, la zone entre une fois et deux fois la durée de vie minimale.

Par exemple, la première distance radiale est supérieure ou égale à 5mm. Dans ce cas, la limite supérieure est située à 5mm du raccordement du pied de pale à la plateforme.

Par exemple, la deuxième distance radiale est inférieure ou égale à 50% de l'étendue maximale de la surface portante de la pale, par exemple inférieure ou égale à 40% de l'étendue maximale de la surface portante de la pale. Dans ce cas, la limite supérieure est située à une distance du raccordement du pied de pale à la plateforme inférieure ou égale à 50% de l'étendue maximale de la surface portante de la pale, par exemple inférieure ou égale à 40% de l'étendue maximale de la surface portante de la pale.

Selon un mode de réalisation, la bande de protection comprend au moins une zone d'épaisseur de revêtement constante.

Selon un mode de réalisation, la bande de protection comprend une zone de transition supérieure s'étendant radialement entre la partie de pale dépourvue de revêtement et la zone de la bande de protection d'épaisseur de revêtement constante.

Par exemple, la bande de protection est appliquée en amont d'un dépôt d'un revêtement formant une barrière thermique.

La bande de protection est, de préférence, réalisée en matériau choisi au moins parmi le groupe comprenant de l'aluminium, du fer, du nickel, du cobalt, de l'yttrium, des terres rares ou des métaux précieux.

Selon un second aspect, l'invention concerne un moteur à turbomachine comprenant une pluralité d'aubes telles que décrites précédemment.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre schématiquement une vue en perspective d'une aube selon un mode de réalisation de l'invention ;
[Fig 2] est une vue de dessus de l'aube de la figure 1 ; et
[Fig 3] illustre schématiquement une vue en perspective d'une aube selon un autre mode de réalisation de l'invention.

Dans la suite de la description, les termes « amont » et « aval » sont définis par rapport au sens de circulation de l'air dans la turbomachine. Les termes « intérieur » et « extérieur » sont définis par rapport à une direction radiale à l'axe principal longitudinal X-X de l'aube, l'intérieur étant plus proche de l'axe principal que l'extérieur.

### Exposé détaillé d'au moins un mode de réalisation

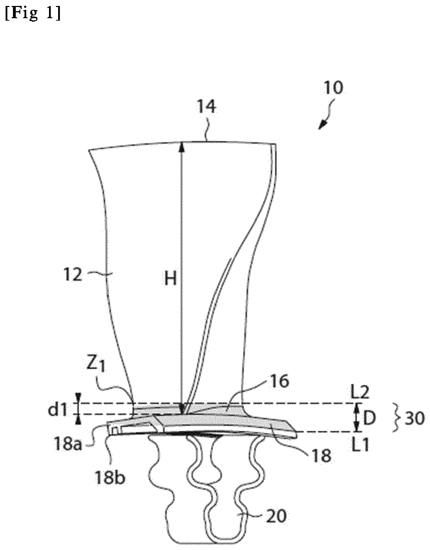

Sur la figure 1 est représentée très schématiquement une vue en perspective d'une aube 10 conçue pour être montée dans une turbomachine (non représentée), et notamment un turboréacteur d'aéronef. La turbomachine ne sera pas détaillée dans la suite de la description.

L'aube 10 comprend une pale aérodynamique 12 s'étendant radialement vers l'extérieur, et comportant une extrémité radiale externe ou tête de pale 14 et une extrémité radiale interne 16 ou pied de pale.

L'aube 10 comprend en outre une plateforme 18 raccordée au pied de pale 16 et un tourillon 20 pouvant s'engager, par exemple, dans un alésage d'un élément de la turbomachine.

Tel qu'illustré, la plateforme 18 est délimitée par une extrémité supérieure 18a raccordée au pied de pale 16 et une extrémité inférieure 18b, radialement opposée à l'extrémité supérieure 18a et, par exemple, raccordée au tourillon 20.

La distance radiale H maximale entre la tête de pale 14 et la plateforme 18 définit la hauteur radiale ou l'étendue maximale de la surface portante de la pale 12.

Telle qu'illustrée sur les figures, l'aube 10 est partiellement recouverte d'une bande 30 de protection contre l'oxydation et la corrosion. La bande 30 recouvre l'aube 10 uniquement à son extrémité radiale interne fortement contrainte.

L'extrémité radiale externe 14 de la pale 12 n'est pas revêtue. Ainsi, on évite les nuisances liées à la présence d'un revêtement sur l'extrémité radiale externe de la pale, notamment en termes de masse, d'augmentation des contraintes, de fluage de revêtement, etc..., tout en améliorant la durée de vie en fatigue et en thermomécanique de l'extrémité radiale interne de la pale.

La bande 30 de protection s'étend entre une limite inférieure L1 et une limite supérieure L2. La distance radiale D entre lesdites limites L1, L2 définit la hauteur de la bande 30 de protection.

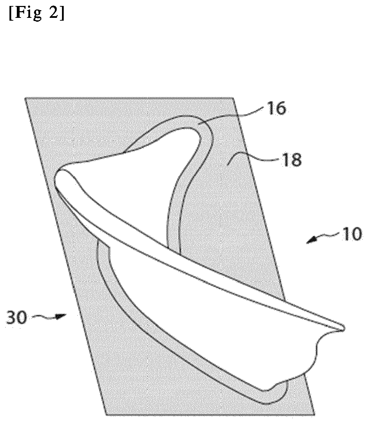

Tel qu'illustré sur les figures 1 et 2, la limite inférieure L1 est située sur la plateforme 18, par exemple à son extrémité inférieure 18b. De manière générale, la limite inférieure L1 est située sur une partie de la plateforme 18.

La limite supérieure L2 est située à l'extrémité radiale interne 16 de la pale 12, par exemple sur le pied de pale.

De manière générale, la limite supérieure L2 est située entre une première distance radiale d1, visible sur la figure 1 et une deuxième distance radiale d2, visible sur la figure 2.

La première distance radiale d1 correspond à une distance entre le raccordement du pied de pale 16 à la plateforme 18 et une première zone Z1 située sur le pied de pale 16.

La deuxième distance radiale d2 correspond à une distance entre le raccordement du pied de pale 16 à la plateforme 18 et une deuxième zone Z2 située sur le pied de pale 16. La deuxième zone Z2 correspond à une zone dite « limitante en fluage ».

Par zone « limitante en fluage », on entend une zone combinant une contrainte mécanique et un niveau thermique tels que la pale se dégradera (ou vieillira) préférentiellement en fluage dans cette zone. Cette zone est classiquement proche du milieu du profil et peut être déterminée par exemple par essai sur le composant, ou par calculs élasto-plastiques sur toute la pale pour mettre en évidence les zones qui se déformeraient le plus sous l'effet des contraintes, températures et des durées d'application de ces sollicitations, ou par exemple, par la relation de Larson-Miller liant sur toute la pale contraintes, températures et durées de vie à rupture pour un matériau donné. La zone limitante en fluage est, par exemple, la zone entre une fois et deux fois la durée de vie minimale.

Par exemple, la première distance radiale d1 est supérieure ou égale à 5mm et la deuxième distance radiale d2 est inférieure ou égale à 50% de l'étendue maximale H de la surface portante de la pale 12, par exemple inférieure ou égale à 40% de l'étendue maximale H de la surface portante de la pale 12.

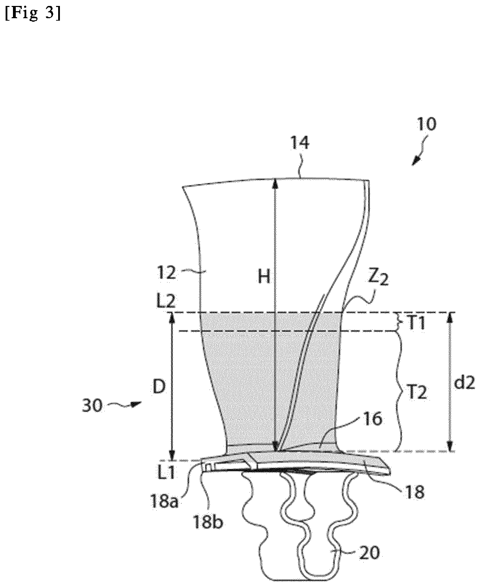

A titre d'exemple non limitatif, la bande 30 de protection comprend une zone de transition supérieure T1, visible sur la figure 3, d'épaisseur de revêtement variable, s'étendant entre la partie de pale 12 dépourvue de revêtement et une zone inférieure T2 de la bande 30 de protection d'épaisseur de revêtement constante.

L'aube 10 peut être réalisée en matériau à base de nickel, de cobalt, équiaxe-DS-monocristal et peut être obtenue par procédé de taille dans la masse, coulée, forgée ou par tout autre procédé.

La bande 30 de protection peut comprendre de l'aluminium avec ou sans additifs provenant de métaux précieux ou terres rares, par exemple en MCrAIY, avec M choisis parmi le fer, le nickel, le cobalt, l'yttrium, ou encore des terres rares ou métaux précieux.

La bande 30 de protection peut être appliquée en amont d'un dépôt d'un revêtement formant une barrière thermique.

Grâce à la bande de protection contre la corrosion et l'oxydation selon l'invention, les durées de vie en fatigue thermomécanique ou vibratoire des aubes, et notamment des pieds de pales sont fortement améliorées en écartant le risque d'amorçage de fissures en pied d'aube par suppression des dégradations de surface liées à l'oxydation et à la corrosion.

La bande de protection recouvrant l'aube uniquement à son extrémité interne permet de limiter les impacts fonctionnels liés à l'ajout d'un revêtement anti-oxydation.

## Revendications

1. Aube (10) pour un moteur à turbomachine comprenant :
- une pale aérodynamique (12) s'étendant radialement vers l'extérieur et comportant une tête de pale (14) et un pied de pale (16), et
- une plateforme (18) raccordée au pied de pale (16) par une extrémité supérieure (18a), la distance radiale (H) maximale entre la tête de pale (14) et la plateforme (18) définissant une étendue maximale de la surface portante de la pale aérodynamique (12), telle que l'aube (10) est partiellement recouverte d'une bande (30) de protection contre l'oxydation et la corrosion, ladite bande (30) s'étendant entre une limite inférieure (L1) située sur au moins une partie de la plateforme (18) et une limite supérieure (L2) située sur le pied de pale (16),
**caractérisée en ce que** la tête de pale (14) n'est pas revêtue de la bande (30) de protection.

2. Aube (10) selon la revendication 1, dans laquelle la limite inférieure (L1) est située à une extrémité inférieure (18b) de la plateforme (18), radialement opposée à l'extrémité supérieure (18a).

3. Aube (10) selon la revendication 1 ou 2, dans laquelle la limite supérieure (L2) est située entre une première distance radiale (d1) et une deuxième distance radiale (d2), ladite première distance radiale (d1) correspondant à une distance entre le raccordement du pied de pale (16) à la plateforme (18) et une première zone (Z1) située sur ledit pied de pale (16), et ladite deuxième distance (d2) correspondant à une distance entre le raccordement du pied de pale (16) à la plateforme (18) et une deuxième zone (Z2) située sur ledit pied de pale (16).

4. Aube (10) selon la revendication 3, dans laquelle la première distance radiale (d1) est supérieure ou égale à 5mm.

5. Aube (10) selon la revendication 3 ou 4, dans laquelle la deuxième distance radiale (d2) est inférieure ou égale à 50% de l'étendue maximale (H) de la surface portante de la pale aérodynamique (12).

6. Aube (10) selon l'une quelconque des revendications précédentes, dans laquelle la bande (30) de protection comprend au moins une zone (T2) d'épaisseur de revêtement constante.

7. Aube (10) selon la revendication 6, dans laquelle la bande (30) de protection comprend une zone de transition supérieure (T1) s'étendant radialement entre la partie de pale aérodynamique (12) dépourvue de revêtement et la zone (T2) de la bande (30) de protection d'épaisseur de revêtement constante.

8. Aube (10) selon l'une quelconque des revendications précédentes, dans laquelle la bande (30) de protection est appliquée en amont d'un dépôt d'un revêtement formant une barrière thermique.

9. Aube (10) selon l'une quelconque des revendications précédentes, dans laquelle la bande (30) de protection est réalisée en matériau choisi au moins parmi le groupe comprenant de l'aluminium, du fer, du nickel, du cobalt, de l'yttrium, des terres rares ou des métaux précieux.

10. Moteur à turbomachine comprenant une pluralité d'aubes selon l'une quelconque des revendications précédentes.

## Patentansprüche

1. Schaufel (10) für einen Turbomaschinenmotor, umfassend :
- ein aerodynamisches Schaufelblatt (12), die sich radial zur Außenseite hin erstreckt und einen Schaufelblattkopf (14) und einen Schaufelblattfuß (16) umfasst, und
- eine Plattform (18), die mit dem Schaufelblattfuß (16) durch ein oberes Ende (18a) verbunden ist, wobei der maximale radiale Abstand (H) zwischen dem Schaufelblattkopf (14) und der Plattform (18) eine maximale Erstreckung der tragenden Fläche des aerodynamischen Schaufelblatts (12) definiert, so dass die Schaufel (10) teilweise mit einem Schutzstreifen (30) gegen Oxidation und Korrosion bedeckt ist, wobei sich der Streifen (30) zwischen einer unteren Begrenzung (L1), die sich zumindest auf einem Teil der Plattform (18) befindet, und einer oberen Begrenzung (L2), die sich auf dem Schaufelblattfuß (16) befindet, erstreckt,
**dadurch gekennzeichnet, dass** der Schaufelblattkopf (14) nicht mit dem Schutzstreifen (30) beschichtet ist.

2. Schaufel (10) nach Anspruch 1, wobei die untere Begrenzung (L1) sich an einem unteren Ende (18b) der Plattform (18) radial gegenüber dem oberen Ende (18a) befindet.

3. Schaufel (10) nach Anspruch 1 oder 2, wobei die obere Begrenzung (L2) sich zwischen einem ersten radialen Abstand (d1) und einem zweiten radialen Abstand (d2) befindet, wobei der erste radiale Abstand (d1) einem Abstand zwischen der Verbindung des Schaufelblattfußes (16) zur Plattform (18) und einer ersten Zone (Z1), die sich auf dem Schaufelblattfuß (16) befindet, entspricht und der zweite Abstand (d2) einem Abstand zwischen der Verbindung des Schaufelblattfußes (16) zur Plattform (18) und einer zweiten Zone (Z2), die sich auf dem Schaufelblattfuß (16) befindet, entspricht.

4. Schaufel (10) nach Anspruch 3, wobei der erste radiale Abstand (d1) größer oder gleich 5 mm ist.

5. Schaufel (10) nach Anspruch 3 oder 4, wobei der zweite radiale Abstand (d2) kleiner oder gleich 50 % der maximalen Erstreckung (H) der tragenden Fläche des aerodynamischen Schaufelblatts (12) ist.

6. Schaufel (10) nach einem der vorhergehenden Ansprüche, wobei der Schutzstreifen (30) mindestens eine Zone (T2) mit konstanter Beschichtungsdicke umfasst.

7. Schaufel (10) nach Anspruch 6, wobei der Schutzstreifen (30) eine obere Übergangszone (T1), die sich radial zwischen dem aerodynamischen Schaufelblattteil (12) ohne Beschichtung und der Zone (T2) des Schutzstreifens (30) mit konstanter Beschichtungsdicke erstreckt.

8. Schaufel (10) nach einem der vorhergehenden Ansprüche, wobei der Schutzstreifen (30) stromaufwärts einer Abscheidung einer Beschichtung, die eine Wärmebarriere bildet, aufgebracht ist.

9. Schaufel (10) nach einem der vorhergehenden Ansprüche, wobei der Schutzstreifen (30) aus einem Material hergestellt ist, das zumindest aus der Gruppe ausgewählt ist, die Aluminium, Eisen, Nickel, Kobalt, Yttrium, seltene Erden oder Metalle umfasst.

10. Turbomaschinenmotor, umfassend eine Vielzahl von Schaufeln nach einem der vorhergehenden Ansprüche.

## Claims

1. A blade (10) for a turbomachine engine comprising:
- an aerodynamic blade (12) extending radially outwardly and including a blade head (14) and a blade root (16), and
- a platform (18) connected to the blade root (16) by an upper end (18a), the maximum radial distance (H) between the blade head (14) and the platform (18) defining a maximum extent of the airfoil of the aerodynamic blade (12), such that the blade (10) is partially covered with a strip (30) for protection against oxidation and corrosion, said strip (30) extending between a lower limit (L1) located on at least one portion of the platform (18) and an upper limit (L2) located on the blade root (16), **characterised in that** the blade head (14) is not coated with the protective strip (30).

2. The blade (10) according to claim 1, wherein the lower limit (L1) is located at a lower end (18b) of the platform (18), radially opposite to the upper end (18a).

3. The blade (10) according to claim 1 or 2, wherein the upper limit (L2) is located between a first radial distance (d1) and a second radial distance (d2), said first radial distance (d1) corresponding to a distance between the connection of the blade root (16) to the platform (18) and a first zone (Z1) located on said blade root (16), and said second distance (d2) corresponding to a distance between the connection of the blade root (16) to the platform (18) and a second zone (Z2) located on said blade root (16).

4. The blade (10) according to claim 3, wherein the first radial distance (d1) is greater than or equal to 5 mm.

5. The blade (10) according to claim 3 or 4, wherein the second radial distance (d2) is less than or equal to 50% of the maximum extent (H) of the airfoil of the aerodynamic blade (12).

6. The blade (10) according to any one of the preceding claims, wherein the protective strip (30) comprises at least one zone (T2) of constant coating thickness.

7. The blade (10) according to claim 6, wherein the protective strip (30) comprises an upper transition zone (T1) extending radially between the portion of the aerodynamic blade (12) devoid of coating and the zone (T2) of the protective strip (30) of constant coating thickness.

8. The blade (10) according to any one of the preceding claims, wherein the protective strip (30) is applied upstream of a deposition of a coating forming a thermal barrier.

9. The blade (10) according to any one of the preceding claims, wherein the protective strip (30) is made of a material selected at least from the group comprising aluminium, iron, nickel, cobalt, yttrium, rare earths or precious metals.

10. A turbomachine engine comprising a plurality of vanes according to any one of the preceding claims.
